Europäisches Patentamt

(19) European Patent Office

Office européen des brevets

(11) Publication number: **0 222 936**
B1

## (12) EUROPEAN PATENT SPECIFICATION

(45) Date of publication of the patent specification:
30.08.89

(51) Int. Cl.⁴: **B01J 3/02**, C10J 3/30, G01F 11/02

(21) Application number: 85307334.4

(22) Date of filing: 14.10.85

(54) Dry feeder for finely divided solids into high pressure atmosphere.

(43) Date of publication of application:
27.05.87 Bulletin 87/22

(45) Publication of the grant of the patent:
30.08.89 Bulletin 89/35

(84) Designated Contracting States:
DE FR GB SE

(56) References cited:
DE-C- 843 090
FR-A- 2 287 277
US-A- 2 338 606

(73) Proprietor: TEXACO DEVELOPMENT CORPORATION, 2000 Westchester Avenue, White Plains New York 10650(US)

(72) Inventor: Stevenson, John Saunders, 10834 Rose Avenue Apt. 17, Los Angeles, CA 90034(US)

(74) Representative: Ben-Nathan, Laurence Albert et al, Urquhart-Dykes & Lord 91 Wimpole Street, London W1M 8AH(GB)

## Description

This invention concerns a dry feeder for finely divided solids, in general. More specifically it relates to a feeder of the nature indicated that can deliver finely divided solids from atmospheric pressure into a high pressure atmosphere.

## BACKGROUND TO THE INVENTION

Heretofore there have been proposals for feeding solids into a high pressure atmosphere. For example there are U.S. Patent Numbers 4,140,228 issued February 20, 1979 and 4,150,759 issued April 24, 1979, both assigned to the U.S. Department of Energy. However, the arrangements employed in those two patents both involve the use of double acting pistons, and the action requires the pushing of a charge of solids from one location to another in order to accomplish the discharge into a high pressure atmosphere. Such action tends to cause excessive wear of the parts, and this is avoided by the applicants invention.

Another prior structure is a commercial feeder that is called a "Dynamic Sleeve, Piston Type Coal Feeder". It is manufactured by Conspray Construction Systems, Inc, 111 West Dyer Road, Suite B, Santa Ana, California 92707. The structure of that feeder also makes use of a pushing action to discharge the solids into the high pressure atmosphere. In addition, it requires a relatively complex mechanism which has a sleeve that surrounds a piston and includes a secondary piston inside the sleeve structure. On the other hand, the applicant's invention provides a relatively simple structural arrangement whereby the finely divided solids are charged by gravity feed and thereafter, following pressurization, are discharged also by gravity feed into the high pressure atmosphere. There is only a single piston arrangement, and its function is to displace the high pressure atmosphere remaining in the chamber following the discharge by gravity flow.

US Patent No. 3,190,509 describes a gravity feed device of fluent materials into a high pressure vessel, including a low pressure hopper and a load chamber kept under high pressure from which the material is discharged under gravity into the high pressure vessel. However this specification teaches the use of an intermediate lock hopper through which the material is passed from the low pressure hopper to the high pressure load chamber, the material being pressurized in the intermediate lock hopper.

Consequently, it is an object of this invention to provide an improved dry feeder for finely divided solids that permits gravity flow charging of the solids followed by pressurizing and gravity flow discharge into a high pressure atmosphere.

Another object of the invention is to provide a relatively simplified structure which can in addition to making the charging and discharging action take place by gravity flow, provide for displacing the high pressure atmosphere following discharge in order to reduce the high pressure loss to a minimum.

## BRIEF SUMMARY OF THE INVENTION

Briefly the invention may be described as a dry feeder for finely divided solids into a high pressure atmosphere. It comprises a load chamber and a chute means for delivering said solids by gravity flow at atmospheric pressure to said load chamber. It also comprises first valve means for controlling said delivery including seal means to withstand said high pressure, and means for pressurizing said load chamber. It also comprises means for orienting said load chamber for permitting discharge by gravity flow into said high pressure atmosphere, and second valve means for controlling said gravity discharge. It further comprises means for displacing said high pressure atmosphere from said load chamber after said gravity discharge.

An embodiment of the invention may comprise a dry feeder for finely divided solids into a high pressure atmosphere, comprising a cylindrical load chamber having a discharge end for said finely divided solids, means for orienting the axis of said chamber at an angle greater than the angle of repose of said finely divided solids toward said discharge end, chute means for delivering said solids by gravity flow at atmospheric pressure to said load chamber at one side thereof, first valve means for controlling said delivery to said load chamber from said chute means, comprising a cylinder mounted with its axis parallel to the axis of said load chamber, a lateral slot through said cylinder for connecting said chute means with said load chamber, and seal means at the ends and sides of said cylinder for withstanding said high pressure when said valve means is closed, means for pressurizing said load chamber, second valve means associated with said discharge end of said load chamber for controlling discharge after said chamber is pressurized, an elongated piston coaxial with said load chamber for displacing said high pressure atmosphere from said load chamber after said pressurized load chamber has discharged through said second valve means, a longitudinal groove on said piston for accommodating said first valve means cylinder, and second seal means on said piston for maintaining said high pressure in said load chamber.

Again briefly, the invention may be embodied as a dry feeder for powdered coal and the like, into a high pressure atmosphere. It comprises in combination a cylindrical chamber for holding a charge of said powdered coal, and means for mounting said chamber at an angle greater than the angle of repose of said charge, for biasing said charge toward one end of said chamber. It also comprises first valve means at said one end of said chamber to control discharge therefrom into said high pressure atmosphere, and a receptacle for holding a supply of said powdered coal.

It also comprises means for connecting said receptacle with said chamber at an angle greater than the angle of repose of said powdered coal for permitting gravity feed from said receptacle to said chamber, and second valve means for controlling said gravity feed. It also comprises means for pressurizing said chamber to equalize said high pressure atmosphere, and means for displacing said high pressure atmosphere from said chamber after discharge of said powdered coal therefrom.

Once more briefly, the invention may be embodied as a dry feeder for powdered coal and a like into a high pressure atmosphere. It comprises in combination a cylindrical chamber for holding a charge of said powdered coal, and a means for mounting said chamber with its axis at an angle of about seventy degrees from horizontal for biasing said charge towards the lower end thereof. It also comprises the first valve means at said lower end of said chamber to control discharge therefrom into said high pressure atmosphere, and a receptacle for holding a supply of said powdered coal. It also comprises means for connecting said receptacle with said chamber at an angle of about seventy degrees from horizontal for permitting gravity feed from said receptacle to said chamber, and second valve means comprising a solid cylinder mounted in the wall of said chamber with the axis of the cylinder parallel to the axis of the chamber. It also comprises a transverse slot through said cylinder with the axis of said slot at about forty degrees from the axis of said cylinder, and means for sealing said cylinder mounting for holding said high pressure when said cylinder is rotated ninety degrees. It also comprises means for pressurizing said chamber to equalize said high pressure atmosphere, and a piston reciprocally movable in said chamber for displacing said high pressure atmosphere from said chamber after discharge of said powdered coal. The said piston has a longitudinal groove thereon to accommodate said second valve means within said chamber.

## BRIEF DESCRIPTION OF THE DRAWINGS

The foregoing and other objects and benefits of the invention will be more fully set forth below in connection with the best mode contemplated by the inventor of carrying out the invention, and in connection with which there are illustrations provided in the drawings, wherein:

Fig. 1 is a schematic longitudinal cross section showing an assembly of the elements according to the invention;

Fig. 2 is an enlarged cross section view taken along the lines 2-2 of Fig. 1 and looking in the direction of the arrows;

Fig. 3 is another enlarged cross section view like Fig. 2, but which shows the valve in its closed position;

Fig. 4 is an enlarged cross section view taken along the lines 4-4 of Fig. 1 and looking in the direction of the arrows; and

Fig. 5 is an exploded perspective showing the inlet valve cylinder along with the displacement piston of the Fig. 1 showing.

## DETAILED DESCRIPTION

A dry feeder according to this invention has the advantage of providing gravity movement for the finely divided solids through the feeder, both to load, as well as to unload after the high pressure atmosphere has been connected. In order to accomplish the gravity discharge into the high pressure atmosphere, the chamber for holding a charge of the finely divided solids is oriented at an angle that is greater than the angle of repose of the fine solids. Thus, by having the load chamber set at an angle of approximately seventy degrees or more with the horizontal, the finely divided solids may discharge by gravity flow after the chamber has been pressurized to equalize with the high pressure atmosphere into which the solids are being discharged. Along with that benefit, the arrangement provides for a charging chute connection that has a cylindrical rotating valve so that each charge of the finely divided solids may flow into the chamber by gravity and thereafter have the inlet valve close using a rotating action which avoids any frictional slicing into the solids in the loading chamber.

Referring to the drawings, it will be observed that there is a cylindrical load chamber 11 to hold a charge of powdered coal (not shown) or the like. Chamber 11 is located at the lower end of a generally cylindrical structure 12 which is mounted on a horizontal upper wall 15 of a high pressure container. It will be understood that this wall 15 contains high pressure there beneath. It may be one wall of a manifold or the upper wall of a gasifier (not shown) or the like, and it has a hole 14 therein through which the lower end of the cylindrical structure 12 extends.

The structure 12 might take different configurations, but in the illustrated embodiment it has an integral flange 16 near the lower end. This flange 16 is for securely attaching the whole structure 12 to the high pressure wall 15. It is to be noted that whatever the container of a high pressure atmosphere may be, the axis of the chamber 11 is oriented at about seventy degrees or greater with the horizontal. In the illustration, the wall 15 of the high pressure containing element lies horizontally.

There is a chute 19 that is integrally connected with an outer cylindrically shaped surface 20 of a specially constructed valve 21. This valve 21 is made up of a cylinder 24 that is mounted for rotation on an axis which is parallel to the axis of the load chamber 11. Thus, the cylinder 24 rotates about its axles 25 and 26 and may be rotated through an angle of ninety degrees. Such rotation may be carried out by any feasible arrangement such as by means of an arm 29 that is securely attached near the end of the axle 26.

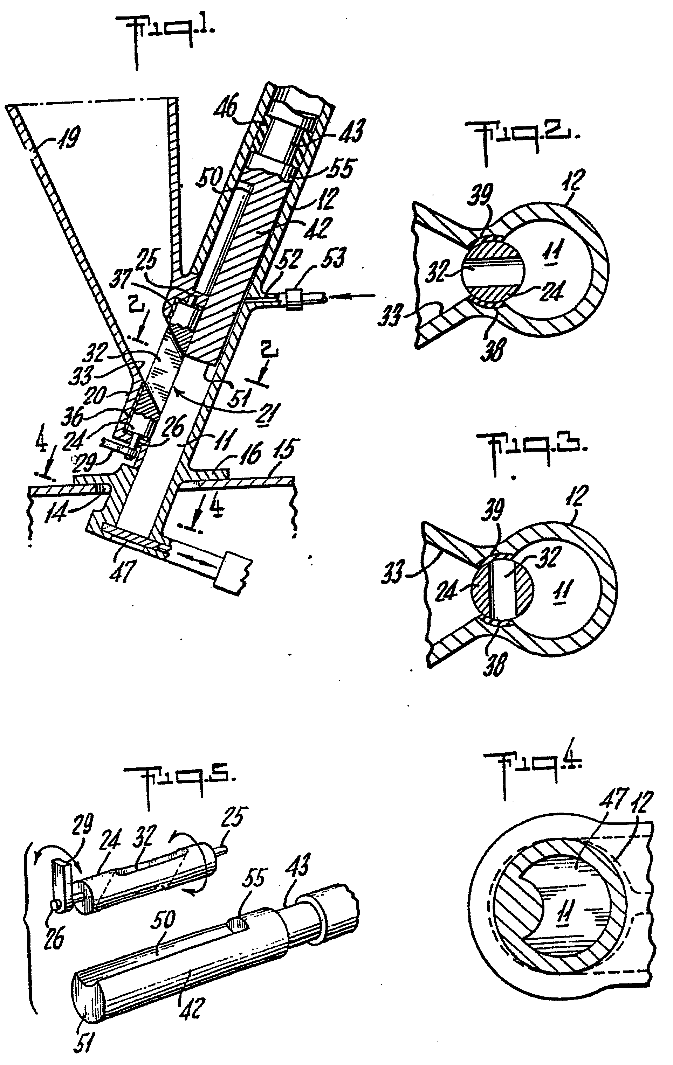

The valve 21 includes a lateral slot 32 through the cylinder 24. This slot 32 goes through the cylinder 24 at an angle in order to coincide and be in alignment with a lower opening 33 at the mouth of the chute 19. It will be observed that because the slot 32 is angled through the cylinder 24, when the valve 21 is open (as illustrated in Fig. 1) the slot 32 is in alignment with both the bottom of the chute 19 and the upper end of the chamber 11.

There are seals 36 and 37 that are supported by surrounding structure which includes the outer surface 20 that covers one end of the cylinder 24. There are also integral seals 38 and 39 which extend to and join together with the seals 36 and 37. These seals 38 and 39 lie along the sides of the structure that supports the central portion of the cylinder 24, in the manner illustrated in Fig. 2 and 3. Thus, over the central portion of the cylinder 24 it has the connecting seals 38 and 39 which create the ability to seal the valve closed against the high pressure when it is in the position illustrated in Fig. 3.

There is a piston 42 that may move longitudinally i.e. axially within the structure 12 which has a cylindrical internal shape. The piston 42 has a reduced diameter section 43 to accommodate a seal 46 for holding the high pressure of the atmosphere internally of the wall 15 when the chamber 11 has been pressurized and/or when a valve 47 at the lower end of the chamber 11 is open. The piston 42 has a longitudinal groove 50 along the upper surface thereof. This accommodates the cylindrical shape of the cylinder 24 and its supporting structure.

There is an inlet passage 52 that goes through the wall of the structure 12 at a location that is down stream of the seal 46 on piston 42 when fully extended, but up stream of face 51 of the piston 42 when it is fully retracted. The retracted position is illustrated in Fig. 1. This inlet passage 52 is for introducing a pressurizing gas into the chamber 11 following a filling of the chamber by a charge from the chute 19 through the slot 32 of the valve 21. It will be appreciated that the valve 21 will be closed after such charge has filled the chamber 11 and before the pressurizing gas is introduced through the passage 52. It may be noted that there is a valve 53 to control the introduction of the pressurizing gas and to close the passage 52 after high pressure has been applied. Also, the inlet structure of the passage 52 i.e. where it connects into the interior of the structure 12 surrounding the piston 42, may have a dispersion ring (not shown) or the like for circumferentially dispersing the pressurizing gas around the piston 42.

It will be understood that the valve 47 which is schematically illustrated as a gate type valve, might take other forms e.g. a full port ball valve or other suitable type. Also, it will be understood that whatever form this valve takes it must be able to seal against the high pressure atmosphere internally of the wall 15 when the valve is closed

OPERATION

A typical cycle of operation of the feeder is as follows. Starting with the valve 21 open and the other parts in the positions illustrated in Fig. 1, finally divided solids, e.g., powdered coal (not shown) will fall by gravity from the chute 19 down through the slot 32 in the cylinder 24 of the valve 21 until such solids fill the chamber 11. At this time, of course the chamber 11 is at atmospheric pressure.

Next, as soon as the chamber 11 has been filled by gravity flow (because of the angle of the chute 19 and the passage way through the slot 32), the valve 21 will be closed by rotating the cylinder 24 ninety degrees using the arm 29.

Then the valve 53 will be opened to admit gas under pressure to flow through the passage 52 and around the piston 42 into the chamber 11 until it is equal in pressure with the high pressure atmosphere inside of the wall 15. As soon as the pressure has been equalized, the valve 53 will be closed and then the valve 47 will be opened by withdrawing its gate.

Following the opening of valve 47, the powdered coal or other finely divided solids in the chamber 11 will fall out under gravity flow into the high pressure atmosphere beneath the wall 15. As before, this emptying action, or flow out of the chamber 11 takes place because of the angle that the axis of chamber 11 makes with the horizontal. It is such that it is greater than the angle of repose of the finely divided solids. In the embodiment illustrated, the angle is about seventy degrees with the horizontal.

After the discharge of the material by gravity flow from the chamber 11 the piston 42 is reciprocated downward within the chamber 11 until the end of the groove 50 reaches the valve 21 and the face 51 reaches the valve 47. Consequently it will displace substantially all of the high pressure atmosphere that existed in the chamber 11. Also, as that action takes place there is a purging of any loose materials left clinging to the walls of the chamber 11. Such purging is assisted by reason of the displacing of gas from the space within the groove 50 of the piston 42. Such displacement happens as the full diameter section 55 at the top of the piston 42 moves down to the valve 21. It may also be desireable to add some purging action by a controlled flow through the passage 52. That added purging would be done by manipulating the valve 53.

After the piston 42 has been fully extended the valve 47 will be closed once more and the valve 53 will also be closed. Next, the piston 42 will be withdrawn back up to the fully retracted position illustrated in Fig. 1, and the valve 21 will be opened by rotating the cylinder 24 back to the position indicated by the Fig. 2 illustration. Consequently the slot 32 will be in line with the bottom of the chute 19 once more and will be open into the chamber 11. This permits a next charge of the powdered coal or other finely divided solids to flow through the slot 32 and fill the chamber 11 so that another cycle may be commenced, like that just described.

It will be noted that the action of this feeder has the benefits of low friction and so anti-wear action, by reason of gravity filling of the chamber 11. In addition, the action of valve closing of the valve 21 which is by axial rotation of its cylindrical shape, minimizes any shearing type frictional action against the powdered coal in the chamber 11. Similarly, when the charge of coal is discharged from the chamber 11 following the pressurization, the powdered coal may again fall out by gravity flow with substantially no frictional wear. And, when the high pressure atmosphere within the chamber 11 is displaced by the piston 42, there is the afore described purging action which is combined with little if any frictional wear created by the pushing out of remaining loose particles of the charge. Thus, it will be noted that the structure of a feeder according to this invention has basically simple structural elements, and it operates with the advantages of minimal frictional wear as the charges are introduced during the cycling operations.

While a particular embodiment of the invention has been described above in considerable detail in accordance with the applicable statures, this is not to be taken as in any way limiting the invention but merely as being descriptive thereof.

### Claims

1. A dry feeder for finely divided solids into a high pressure reactor vessel, comprising: a load chamber (11), chute means (19) for delivering said solids by gravity flow at atmospheric pressure directly into said load chamber, first valve means (21) for controlling said delivery, means (52, 53) for pressurizing said load chamber, means (16) for orienting said load chamber for permitting discharge by gravity flow directly into said high pressure reactor vessel, second valve means (47) for controlling said gravity discharge, and means (42) for displacing said high pressure atmosphere from said load chamber after said gravity discharge into the reactor vessel, characterized in that said first valve comprises a rotary valve member comprising a cylinder (24) rotatably mounted in a wall of the load chamber (11) to control an inlet into the load chamber, the cylinder having a lateral slot (32) therethrough for connecting said chute means (19) to said load chamber (11), and in that seal means (36–39) are provided at the ends and the sides of said cylinder to withstand said high pressure when said cylinder is rotated to close said inlet and said load chamber is pressurized to said high pressure.

2. A dry feeder according to Claim 1, wherein said load chamber (11) has a longitudinal axis, and said orienting means (16) sets said longitudinal axis at an angle greater than the angle of repose of said finely divided solids.

3. A dry feeder according to Claim 2, wherein said angle is about seventy degrees to the horizontal.

4. A dry feeder according to Claim 2 or Claim 3, wherein said load chamber (11) is cylindrical.

5. A dry feeder according to Claim 4, wherein said displacing means is an elongated piston (42) reciprocably movable in said cylindrical chamber (11).

6. A dry feeder according to any of Claims 2–5 wherein said first valve means cylinder (24) is mounted with its axis parallel to the axis of said load chamber (11).

7. A dry feeder according to Claims 5 and 6, wherein said elongated piston (42) has a groove (50) to accommodate said first valve cylinder (24).

8. A dry feeder according to Claim 5 or Claim 7, further comprising second seal means (46) on said elongated piston (42) for maintaining said load chamber pressure.

9. A high pressure reactor vessel (15) having a dry feeder as claimed in any preceding Claim for discharging finely divided solids into the reactor vessel.

### Patentansprüche

1. Trockenzuführungsvorrichtung für feinverteilte Feststoffe in ein Hochdruckreaktionsgefäß, welche folgendes umfaßt: eine Füllgutkammer (11), eine Schütteneinrichtung (19) zum Zuführen besagter Feststoffe durch Schwerkraftfluß bei Atmosphärendruck direkt in besagte Füllgutkammer, eine erste Absperreinrichtung (21) zum Steuern besagter Zuführung, Mittel (52, 53) zum Unter-Druck-Setzen besagter Füllgutkammer, Mittel (16) zum Ausrichten besagter Füllgutkammer, um den Austrag durch Schwerkraftfluß direkt in besagtes Hochdruckreaktionsgefäß zu ermöglichen, eine zweite Absperreinrichtung (47) zum Steuern besagten Schwerkraftaustrags und Mittel (42) zum Verdrängen besagter Hochdruckatmosphäre aus besagter Füllgutkammer nach besagtem Schwerkraftaustrag in das Reaktionsgefäß, dadurch gekennzeichnet, daß besagte erste Absperreinrichtung ein Drehschieberteil umfaßt, das einen Zylinder (24) umfaßt, der drehbar in einer Wand der Füllgutkammer (11) angebracht ist, um einen Einlaß in die Füllgutkammer zu steuern, wobei der Zylinder einen hindurchgehenden Querschlitz (32) zum Verbinden besagter Schütteneinrichtung (19) mit besagter Füllgutkammer (11) aufweist, und daß Dichtungsmittel (36–39) an den Enden und den Seiten besagten Zylinders vorgesehen sind, um besagtem Hochdruck zu widerstehen, wenn besagter Zylinder so gedreht wird, daß er besagten Einlaß verschließt, und besagte Füllgutkammer unter besagten Hochdruck gesetzt wird.

2. Trockenzuführungsvorrichtung nach Anspruch 1, dadurch gekennzeichnet, daß besagte Füllgutkammer (11) eine Längsachse aufweist und besagtes Ausrichtungsmittel (16) besagte Längsachse in einem Winkel festlegt, der größer ist als der Schüttwinkel besagter feinverteilter Feststoffe.

3. Trockenzuführungsvorrichtung nach Anspruch 2, dadurch gekennzeichnet, daß besagter Winkel etwa 70° zur Horizontalen beträgt.

4. Trockenzuführungsvorrichtung nach Anspruch 2 oder Anspruch 3, dadurch gekennzeichnet, daß besagte Füllgutkammer (11) zylindrisch ist.

5. Trockenzuführungsvorrichtung nach Anspruch 4, dadurch gekennzeichnet, daß besagtes Verdrängungsmittel ein länglicher Kolben (42) ist, der in besagter zylindrischer Kammer (11) hin und her bewegbar ist.

6. Trockenzuführungsvorrichtung nach einem der Ansprüche 2 bis 5, dadurch gekennzeichnet, daß besagter Zylinder (24) der ersten Absperreinrichtung so angebracht ist, daß seine Achse parallel zur Achse besagter Füllgutkammer (11) verläuft.

7. Trockenzuführungsvorrichtung nach Anspruch 5 und 6, dadurch gekennzeichnet, daß besagter länglicher Kolben (42) eine Rinne (50) aufweist, die besagten Zylinder (24) der ersten Absperreinrichtung aufnimmt.

8. Trockenzuführungsvorrichtung nach Anspruch 5 oder Anspruch 7, weiter gekennzeichnet durch zweite Dichtungsmittel (46) auf besagtem länglichen Kolben (42) zum Aufrechterhalten besagten Füllgutkammerdrucks.

9. Hochdruckreaktionsgefäß (15) mit einer Trockenzuführungsvorrichtung nach einem der vorangehenden Ansprüche zum Austragen feinverteilter Feststoffe in das Reaktionsgefäß.

## Revendications

1. Un alimentateur automatique pour des solides finement divisés dans un récipient de réaction à haute pression, comprenant: une chambre de chargement (11), des moyens de descente (19) pour délivrer lesdits solides par gravité à pression atmosphérique directement dans ladite chambre de chargement, des premiers moyens de soupape (21) pour commander ladite délivrance, des moyens (52, 53) pour pressuriser ladite chambre de chargement, des moyens (16) pour orienter ladite chambre de chargement pour permettre le déchargement par gravité directement dans ledit récipient de réaction à haute pression, des seconds moyens de soupape (47) pour commander ledit chargement par gravité, et des moyens (42) pour évacuer ladite atmosphère à haute pression de ladite chambre de chargement après ledit déchargement par gravité dans le récipient de réaction, caractérisée en ce que ladite première soupape comprend un membre de soupape à rotation comprenant un cylindre (24) monté tournant dans une paroi de la chambre de chargement (11) pour commander une admission dans la chambre de chargement, le cylindre ayant une fente latérale (32) à travers celui-ci pour relier ledit moyen de descente (19) à ladite chambre de chargement (11), et en ce que les moyens d'étanchéité (39) sont prévus aux extrémités et sur les côtés dudit cylindre pour supporter ladite haute pression quand ledit cylindre est tourné pour fermer ladite admission et ladite chambre de chargement étant pressurisée à ladite haute pression.

2. Un alimentateur automatique selon la revendication 1, dans lequel ladite chambre de chargement (11) a un axe longitudinal, et lesdits moyens d'orientation (16) positionnent ledit axe longitudinal à un angle plus grand que l'angle de talus naturel desdits solides finement divisés.

3. Un alimentateur automatique selon la revendication 2, dans lequel ledit angle est d'environ soixante dix degrés par rapport à l'horizontale.

4. Un alimentateur automatique selon la revendication 2 ou la revendication 3, dans lequel la chambre de chargement (11) est cylindrique.

5. Un alimentateur automatique selon la revendication 4, dans lequel ledit moyen de déplacement est un piston allongé (42) alternativement mobile dans ladite chambre cylindrique (11).

6. Un alimentateur automatique selon l'une quelconque des revendications de 2 à 5, dans lequel ledit cylindre des premiers moyens de soupape (24) est monté avec un axe parallèle à l'axe de ladite chambre de chargement (11).

7. Un alimentateur automatique selon les revendications 5 et 6, dans lequel ledit piston allongé (42) a une rainure (50) pour adapter ledit cylindre (24) de première soupape.

8. Un alimentateur automatique selon la revendication 5 ou la revendication 7, comprenant en outre des seconds moyens d'étanchéité (46) sur ledit piston allongé (42) pour maintenir ladite pression de chambre de chargement.

9. Un récipient de réaction à haute pression (15) ayant un alimentateur automatique comme revendiqué selon l'une quelconque des revendications précédentes pour le déchargement des solides finement divisés dans le récipient de réaction.

Fig.1.

Fig.2.

Fig.3.

Fig.4.

Fig.5.